# EUROPEAN PATENT APPLICATION

(11) **EP 3 543 761 A1**
(43) Date of publication of application: **25.09.2019**
(21) Application number: 17872514.9
(22) Date of filing: 13.07.2017
(51) Int. Cl.: G02B 19/00, G02B 5/20, H04M 1/21, F21V 5/04, F21V 9/08, H04M 1/22, G02B 3/04, G02B 5/22

(54) **DEVICE FOR CONDENSING AND CHANGING LIGHT OF MOBILE PHONE**

(30) Priority: 15.11.2016 KR 20160151657; 31.05.2017 KR 20170067909
(71) Applicant: Donga-A Eng Co., Ltd., Gyeonggi-do 15117 (KR)
(72) Inventor: KIM, Eunsol, Gyeonggi-do 15862 (KR)
(74) Representative: Cabinet Chaillot
(86) International application number: PCT/KR2017/007492
(87) International publication number: WO 2018/093009

(57) **Abstract**

The present invention relates to a device for condensing and changing light of a mobile phone, the device including: a base clamp module having a primary condensing lens focusing and refracting incident light from a lighting device of a mobile phone to increase a projection distance and having a primary condensing lens fixing means; a zoom condensing lens module having a secondary zoom condensing lens focusing and refracting incident light from the lighting device of the mobile phone to increase the projection distance and having a secondary zoom condensing lens fixing means supporting and fixing the secondary zoom condensing lens so as to be capable of zooming in/out the secondary zoom condensing lens to adjust the projection distance to a near or far distance; and a color filter module having a color filter passing only wavelengths of a specific color with respect to emitted light from the lighting device.

## Description

### Technical Field

The present invention relates generally to a device for condensing and changing light of a mobile phone. More particularly, the present invention relates to a device for condensing and changing light of a mobile phone, whereby light emitted from a lighting device of a smart phone is condensed and changed so as to provide high illuminance and light of a specific color.

### Background Art

There are a flashlight, a lantern, and a searchlight, etc. as examples of a light-condensing lighting device that primarily operate by radiating light forward. A headlight of a vehicle is an example of the light-condensing lighting device radiating light in one direction.

Although the light-condensing lighting device is manufactured for light not to be easily scattered when radiating the light forward, a degree of focusing light (a light-condensing degree) or a radiation angle may be differently set according to the use of the device. When a radiation angle is small, light is radiated only at a narrow range and thus the range of vision becomes narrow, and although when a radiation angle is wide, light is radiated at a wide range, the light is easily scattered and thus a distance visible forward decreases.

Meanwhile, one electric light is used to radiate light at a wide radiation angle, and when required, the radiation angle is adjusted to radiate light only in a specific direction and on a specific area. Although a radiation angle, illuminance, or illuminating direction of a normal lighting device is often predetermined, as mentioned above, when required, illumination direction or illuminance may be required to be changed, and the radiation angle may also be required to be changed frequently or gradually.

The existing smart phone or other mobile phone includes thereon a lighting device which usually includes an LED light source that is used as a light for a camera or as a flashlight necessary for a daily life. Since the lighting device is designed to illuminate at a relatively close distance, the device is difficult to change and set so as to radiate a long distance forward for a different use.

Meanwhile, "Case for mobile communication terminal with diffuser" is disclosed in (Patent Document 1) Korean Patent No. 10-1517111, and the case for mobile communication terminal with a diffuser includes: an open space provided at a middle thereof, the open space allowing manipulation by touching a screen of the mobile communication terminal to be efficiently performed; an upper surface having an earphone port for access of an external device such as an earphone; a lower surface provided with charging jack port for access of a charging jack; an outer surface having a button hole open so as to expose a button of increasing or decreasing volume; and a rear surface having a diffusing device refracting light emitted from a flash device, the rear surface being open not to cover an open lens hole and the flashlight so as not to cover a camera lens while surrounding a rear surface of the mobile communication terminal, wherein the diffusing device includes: a flash hole provided so as to expose a flash terminal to a position corresponding to the flashlight of the mobile communication terminal; a cover base open in upward/downward directions so as to expose the flashlight; a sliding cover being combined with a lower end of the diffusing device, the sliding cover opening or closing one side of the cover base so as to move in a longitudinal direction of the cover base; and the diffuser diffusing a radiating light of the flashlight, wherein one surface of the diffuser is processed in a shape of a convex lens so as to have a hemisphere shape.

As for patent document 1 mentioned above, the case for mobile communication terminal with diffuser houses and stores the mobile communication terminal, and diffuses light produced from the flash device by using the diffuser, thereby providing improved light to a user of the case for mobile communication terminal. Although the case for mobile communication terminal may provide improved light only by diffusion of light according to a predetermined refractive index of the diffuser (a lens), the case for mobile communication terminal cannot change a radiation angle of light emitted from a lighting device of the mobile phone to a desired degree or cannot provide light of a specific color by changing color of the light.

### Disclosure

### Technical Problem

The present invention has been made keeping in mind the above problems occurring in the prior art, and the present invention is intended to propose a device for condensing and changing light of a mobile phone, wherein light emitted from a lighting device of a smart phone is condensed and changed so as to provide high illuminance and light of a specific color.

### Technical Solution

In order to accomplish the above object, the present invention provides a device for condensing and changing light of a mobile phone according to a first embodiment of the present invention, the device including:
a base clamp module being slidably provided on the mobile phone to be attachable to/detachable from the mobile phone, the base clamp module having a primary condensing lens focusing and refracting incident light from a lighting device of the mobile phone so as to increase a projection distance and having a primary condensing lens fixing means supporting and fixing the primary condensing lens;
a zoom condensing lens module being provided on the base clamp module to be attachable to/detachable from the base clamp module, the zoom condensing lens module having a secondary zoom condensing lens focusing and refracting incident light from the lighting device of the mobile phone so as to increase the projection distance and having a secondary zoom condensing lens fixing means supporting and fixing the secondary zoom condensing lens so as to be capable of zooming in/out the secondary zoom condensing lens to adjust the projection distance to a near or far distance; and
a color filter module being provided on the base clamp module to be attachable to/detachable from the base clamp module, the color filter module having a color filter passing only wavelengths of a specific color with respect to emitted light from the lighting device of the mobile phone so as to emit light of the specific color and having a color filter fixing means fixing the color filter.

Here, the primary condensing lens fixing means of the base clamp module may include: a main clamp provided on an outer frame of the mobile phone to be slidably attachable to/detachable from the outer frame; a movable clamp having a clamp shaft provided in a body thereof by passing through the body and being combined with opposite sides of the main clamp so as to reciprocate rectilinearly by using the clamp shaft; a pair of clamp springs fitting over each of two shafts of the clamp shaft so as to be provided in the main clamp, the clamp springs providing an elastic restoring force to enable the movable clamp to reciprocate rectilinearly; a clamp guide cover being combined with a front surface of the main clamp, the clamp guide cover providing guiding protrusions to enable the primary condensing lens to move leftward/rightward horizontally; and
a primary condensing lens liner seating and fixing the primary condensing lens therein and being combined with the main clamp and the clamp guide cover so as to slide leftward/rightward between the main clamp and the clamp guide cover.

In this case, anti-slip rubber pieces may be further provided on each of inner surfaces of side walls of the main clamp and each of inner surfaces of side walls of the movable clamp so as to prevent the inner surfaces from slipping when the inner surfaces of the side walls of the main clamp and the movable clamp contact with the outer frame of the mobile phone.

In addition, the secondary zoom condensing lens fixing means of the zoom condensing lens module may include: a secondary zoom condensing lens main case being combined with the clamp guide cover provided on the main clamp of the primary condensing lens fixing means so as to be slidably attachable to/detachable from the clamp guide cover, the secondary zoom condensing lens main case providing a moving space for zooming in/out of the secondary zoom condensing lens; a zoom liner small module being combined with the secondary zoom condensing lens main case so as to be inserted to and withdrawn from the secondary zoom condensing lens main case within a moving range set for the secondary zoom condensing lens main case; a secondary zoom condensing lens liner fixing the secondary zoom condensing lens to the zoom liner small module and being combined with the secondary zoom condensing lens main case so as to be slide therein; and a zoom limit liner being combined with the secondary zoom condensing lens main case therein, the zoom limit liner holding the secondary zoom condensing lens liner such that the secondary zoom condensing lens liner is not removed from the secondary zoom condensing lens main case.

In this case, the secondary zoom condensing lens liner may further include a rubber ring allowing the zoom liner small module to slide efficiently without shaking in the secondary zoom condensing lens main case when the zoom liner small module is inserted into/withdrawn from the secondary zoom condensing lens main case by zooming in/out of the zoom liner small module.

Additionally, the color filter fixing means of the color filter module may be a rectangular-shaped plate member and may include: a color filter seating hole provided in a middle part of a body thereof, the color filter seating hole seating and fixing a plurality of color filters of different colors therein in series and side by side; and a color filter liner having holding jaws on ends of opposite longitudinal side parts thereof, the holding jaws allowing the color filter fixing means to be mounted to the base clamp module so as to be attachable to/detachable from the base clamp module.

Furthermore, as described above, the device for condensing and changing light of a mobile phone in according to the first embodiment of the present invention, preferably, may further include: a mood lighting cap provided on a front surface of the color filter liner, the mood lighting cap receiving light of color changed by the color filter and emitting lighting light of the light.

In this case, the mood lighting cap may include a base part provided on the front surface of the color filter liner so as to be slidably attachable to/detachable from the front surface, and a cone-shaped lamp part provided integrally with the base part.

In addition, as described above, the device for condensing and changing light of a mobile phone according to the first embodiment of the present invention, preferably, may further include: an image film member provided on a rear surface of the primary condensing lens liner of the base clamp module so as to be attachable to/detachable from the rear surface, the image film member projecting a specific image on a radiating surface of light by receiving light from the lighting device of the mobile phone.

Additionally, so as to achieve the above object, a device for condensing and changing light of a mobile phone according to a second embodiment of the present invention includes:
a primary condensing lens module being provided on the mobile phone to clampingly be attachable to/detachable from the mobile phone, the primary condensing lens module having a primary condensing lens focusing and refracting incident light from a lighting device of the mobile phone so as to increase a projection distance and having a primary condensing lens fixing means supporting and fixing the primary condensing lens;
a zoom condensing lens module being provided on the primary condensing lens module to be attachable to/detachable from the primary condensing lens module, the zoom condensing lens module having a secondary zoom condensing lens focusing and refracting incident light from the lighting device of the mobile phone so as to increase the projection distance and having a secondary zoom condensing lens fixing means supporting and fixing the secondary zoom condensing lens so as to be capable of zooming in/out the secondary zoom condensing lens to adjust the projection distance to a near or far distance; and
a color filter module being provided on the primary condensing lens module to be attachable to/detachable from the primary condensing lens module, the color filter module having a color filter passing only wavelengths of a specific color with respect to emitted light from the lighting device of the mobile phone so as to emit light of the specific color and having a color filter fixing means fixing the color filter.

Here, the primary condensing lens fixing means of the primary condensing lens module may include: a clip base constituting a first side of a clip and having a through hole provided on a body thereof so as to fix the primary condensing lens; a clip server constituting a second side of the clip and being combined with the clip base so as to enable a hinge movement by an elastic force of a spring; a lens fixing liner seating and fixing the primary condensing lens therein; and a lens liner being combined with and fixed to the clip base after receiving the lens fixing liner in which the primary condensing lens is seated.

In this case, an anti-slip rubber piece may be further provided on a predetermined portion of a body of the clip server so as to prevent the primary condensing lens module from slipping on the mobile phone when the primary condensing lens module is mounted to the mobile phone.

In addition, the secondary zoom condensing lens fixing means of the zoom condensing lens module may include: a secondary zoom condensing lens main case being combined with a clip base of the primary condensing lens fixing means so as to fittingly be attachable to/detachable from the clip base, the secondary zoom condensing lens main case providing a moving space for zooming in/out the secondary zoom condensing lens; a zoom liner small module being combined with the secondary zoom condensing lens main case so as to be inserted to and withdrawn from the secondary zoom condensing lens main case within a moving range set for the secondary zoom condensing lens main case; a secondary zoom condensing lens liner fixing the secondary zoom condensing lens to the zoom liner small module and being combined with the secondary zoom condensing lens main case so as to be slide therein; and a zoom limit liner being combined with the secondary zoom condensing lens main case therein, the zoom limit liner holding the secondary zoom condensing lens liner such that the secondary zoom condensing lens liner is not removed from the secondary zoom condensing lens main case.

In this case, the secondary zoom condensing lens liner may further include a rubber ring allowing the zoom liner small module to slide efficiently without shaking in the secondary zoom condensing lens main case when the zoom liner small module is inserted into/withdrawn from the secondary zoom condensing lens main case by zooming in/out of the zoom liner small module.

Furthermore, the color filter fixing means of the color filter module may be a diamond-shaped plate member and may include: a plurality of color filter seating holes provided on a body thereof, each of the plurality of color filter seating holes seating and fixing each of a plurality of color filters of different colors therein and being fitted over the lens liner of the primary condensing lens module; and a color filter liner having a through hole provided on a middle part of a body thereof so as to be fitted over a combining protrusion provided on the clip base.

Additionally, as described above, the device for condensing and changing light of a mobile phone according to the second embodiment of the present invention, preferably, my further include: a mood lamp cap being provided on a front surface of a color filter liner, the mood lamp cap receiving light of color changed by the color filter and emitting lighting light of the changed light.

In addition, so as to achieve the above object, a device for condensing and changing light of a mobile phone according to a third embodiment of the present invention includes:
a condensing optical lens (including an optical lens set in which at least two optical lenses are serially arranged);
a combining means for providing the optical lens on a front part (an outer side) of a lighting light source of the mobile phone so as to be attachable to/detachable from the front part of a lighting light source; and
a color filter member provided attachably/detachably on the combining means so as to be positioned at a front part of the optical lens.

Here, an aspheric convex lens may be used as the condensing optical lens, and
the combining means may include a combining main body, a hanging part, a medium part, and an elastic engaging part, wherein
the combining main body may be entirely plate-shaped and may include: a lighting hole provided on an upper part thereof; a cylindrical lens combining part, with which the optical lens is combined, provided to protrude outward so as to communicate with the lighting hole on the plate-shaped combining main body; and a mobile phone combining part provided on a lower part of the combining main body, wherein the mobile phone combining part includes: a circular combining hole; and a rib provided on a surrounding part constituting the combining hole by protruding from the surrounding part so as to be perpendicular to the plate-shaped combining main body,
the hanging part may be made of a rubber or soft synthetic resins, which is flexible, compared to the combining main body, and is bilaterally symmetric, the hanging part being provided on an outside of the combining main body, which is a side opposite to a side at which the mobile phone is positioned, relative to the combining main body and including: a center hole provided on a center thereof; and a hanger provided on each of opposite sides of the hanging part, wherein the rib is press-fitted into the center hole,
the medium part may include: a medium part rib being combined with the rib by being press-fitted to an inner side of the rib protruding from the surrounding part of the combining hole; and a circular plate provided between the mobile phone combining part and the mobile phone so as to be integral to the medium part rib, and
the elastic engaging part may be configured to have a band shape (a ring shape), and while each of opposite sides of the elastic engaging part is held by the hanger of the hanging part, a middle part of the opposite sides surrounds a body of the mobile phone so as to engage the mobile phone with the hanging part.

In addition, the color filter member may include a plurality of color filters, wherein a mounting angle of the color filter member in the combining means may be changed so as to change color of lighting light.

Furthermore, a plate of a clip function may be further provided between a rear contact surface of the mobile phone and the elastic engaging part.

Additionally, an anti-slip pad part may be further provided on a surface of the plate, and band combining grooves may be further provided on the surface of the plate such that the elastic engaging part does not deviate from the surface of the plate by slipping thereon.

In addition, the optical lens may move forward/backward in the combining means so as to control a light-condensing degree of the lighting light source.

Furthermore, the optical lens may include a plurality of lenses having different light-condensing degrees or refractive indices, and a lens selecting member may be further provided on the combining means, the lens selecting member selecting one of the plurality of optical lens and placing the selected optical lens in front of the lighting light source of the mobile phone,

The lens selecting member may change a mounting (combining) angle thereof in the combining means so as to change the light-condensing degree of lighting light.

### Advantageous Effects

According to a device for condensing and changing light of a mobile phone of the present invention, light emitted from a lighting device of a smart phone is condensed by the primary condensing lens and the secondary zoom condensing lens and is changed in color by the color filter, whereby the device increases a projection distance by providing high illuminance to be used as a flash or a lighting device of a specific use and is used in a specific situation or for specific use by providing light of a specific color.

### Description of Drawings

FIG. 1 and FIG. 2 are exploded perspective views showing a configuration of a base clamp module of the device for condensing and changing light of a mobile phone according to a first embodiment of the present invention.
FIG. 3 shows assembled states of the base clamp module shown in FIG. 1 and FIG. 2 and a state of the base clamp module mounted to the mobile phone.
FIG. 4 is an exploded perspective view showing a configuration of a zoom condensing lens module of the device for condensing and changing light of a mobile phone according to the first embodiment of the present invention.
FIG. 5 shows assembled states of the zoom condensing lens module shown in FIG. 4, and mounting the assembled zoom condensing lens module to the base clamp module.
FIG. 6 is a view showing a state of the base clamp module mounted to the mobile phone, the base clamp module being combined with the zoom condensing lens module of the device for condensing and changing light of a mobile phone according to the first embodiment of the present invention.
FIG. 7 shows showing a secondary condensing according to uses of a first lens and a second lens in the state of FIG. 6 and functions of zooming in/out and of condensing light according to the use of a second lens alone.
FIG. 8 shows an exploded perspective view and assembled perspective views of a configuration of a color filter module of the device for condensing and changing light of a mobile phone according to the first embodiment of the present invention.
FIG. 9 shows a process of mounting the color filter module, shown in FIG. 8, to the base clamp module.
FIG. 10 is a view showing a state in which the base clamp module of FIG. 9 with which the color filter module is combined is mounted to the mobile phone.
FIG. 11 shows color lighting embodied by a primary condensing lens, the color filter module, and a mood lighting cap of the device for condensing and changing light of a mobile phone according to the first embodiment of the present invention.
FIG. 12 shows an image projection function according to an application of an image film member to the primary condensing lens of the device for condensing and changing light of a mobile phone according to the first embodiment of the present invention.
FIG. 13 is an exploded perspective view showing a configuration of a primary condensing lens module of a device for condensing and changing light of a mobile phone according to a second embodiment of the present invention.
FIG. 14 shows a process of assembling the primary condensing lens module shown in FIG. 13 and a state of the primary condensing lens module mounted to the mobile phone.
FIG. 15 is an exploded perspective view showing a configuration of a secondary zoom condensing lens module of the device for condensing and changing light of a mobile phone according to the second embodiment of the present invention.
FIG. 16 shows a process of assembling the secondary zoom condensing lens module shown in FIG. 15, a state of the secondary zoom condensing lens module combined with a clip base, and a state of the secondary zoom condensing lens module mounted to the mobile phone, respectively.
FIG. 17 shows a process of combining a color filter module of the device for condensing and changing light of a mobile phone with the primary condensing lens module and a state of the color filter module, which is combined with the primary condensing lens module, mounted to the mobile phone according to the second embodiment of the present invention.
FIG. 18 shows a mood lighting function performed by the primary condensing lens module, the color filter module, and a mood lamp cap of the device for condensing and changing light of a mobile phone according to the second embodiment of the present invention.
FIG. 19 is an exploded perspective view showing a configuration of a device for condensing and changing light of a mobile phone according to a third embodiment of the present invention.
FIG. 20 is a perspective view showing a combined state of the device for condensing and changing light of a mobile phone shown in FIG. 19.
FIG. 21 is a perspective view showing a state of the device for condensing and changing light of a mobile phone of FIG. 20 mounted to the mobile phone.
FIG. 22 is a concept-describing view showing that a light-condensing degree may be changed according to a distance between a lighting light source and an optical lens of the mobile phone.
FIG. 23 is a rear side perspective view of the color filter member to be applied to the device for condensing and changing light of a mobile phone according to the third embodiment of the present invention.
FIG. 24 is a rear side perspective view of the device for condensing and changing light of a mobile phone in a state of the color filter member of FIG. 23 combined with a combining main body.
FIG. 25 is an exploded perspective view showing the embodiment of the device for condensing and changing light of a mobile phone, which is further provided with a clip-functioning plate to be mounted to the mobile phone.
FIG. 26 is a rear side perspective view showing a combined state of the device for condensing and changing light of a mobile phone of FIG. 25.

### Mode for Invention

Hereinbelow, embodiments of the present invention will be described in detail with reference to the accompanying drawings.

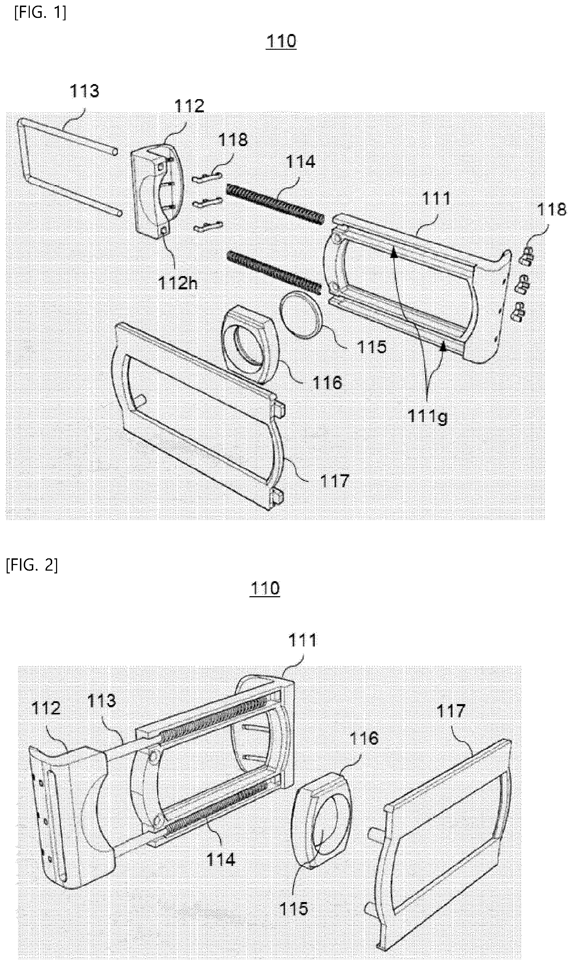

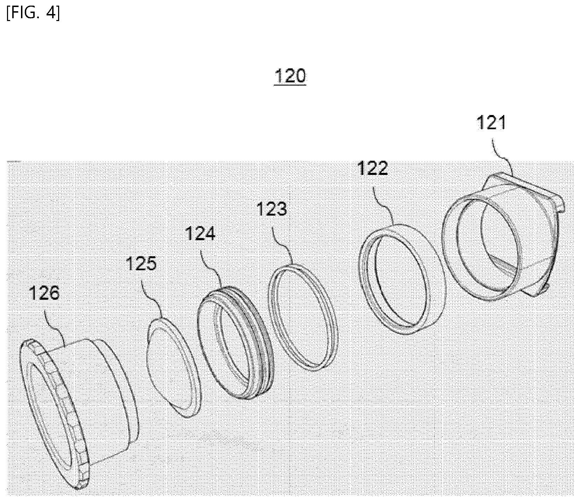

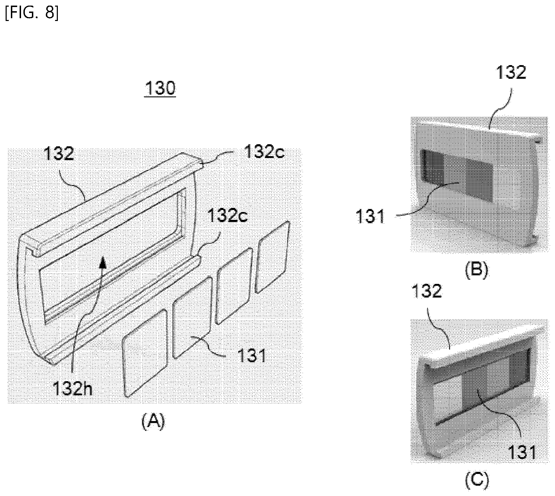

A device for condensing and changing light of a mobile phone according to a first embodiment of the present invention includes a base clamp module 110 (See FIG. 1 and FIG. 2), a zoom condensing lens module 120 (See FIG. 4), and a color filter module 130 (See FIG. 8).

FIG. 1 and FIG. 2 are exploded perspective views showing a configuration of the base clamp module of the device for condensing and changing light of a mobile phone according to the first embodiment of the present invention.

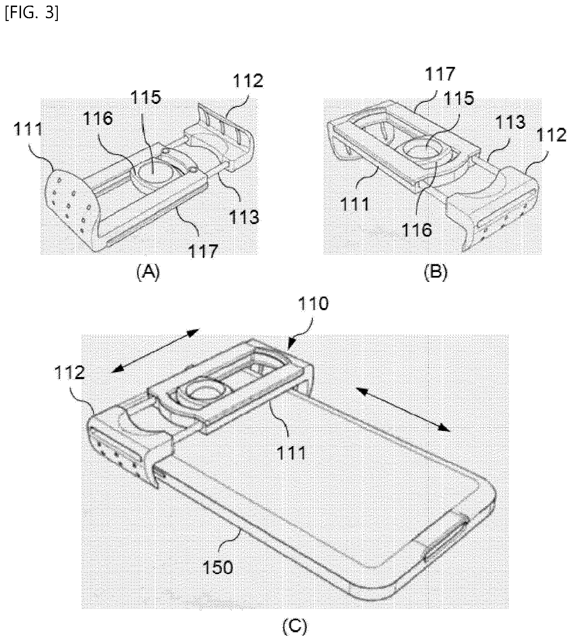

Referring to FIG. 1 and FIG. 2, the base clamp module 110 is provided on the mobile phone 150 (for example, a smart phone) (See FIG. 3) to be slidably attachable to/detachable from the mobile phone, the base clamp module having a primary condensing lens 115 focusing and refracting incident light from a lighting device of the mobile phone 150 (that is, an LED light source of the mobile phone) so as to increase a projection distance and having a primary condensing lens fixing means supporting and fixing the primary condensing lens 115.

Here, the primary condensing lens fixing means includes: a main clamp 111 provided on an outer frame of the mobile phone 150 to be slidably attachable to/detachable from the outer frame; a movable clamp 112 having a clamp shaft 113 of "U" shape provided in a body thereof by passing through through-holes 112h and being combined with opposite sides of the main clamp 111 so as to reciprocate rectilinearly by using the clamp shaft 113; a pair of clamp springs 114 fitting over each of two shafts of the clamp shaft 113 so as to be provided in the main clamp 111, that is, in guide grooves 111g provided on opposite longitudinal sides of a body of the main clamp 111, the clamp springs providing an elastic restoring force to enable the movable clamp 112 to reciprocate rectilinearly; a clamp guide cover 117 being combined with a front surface of the main clamp 111, the clamp guide cover providing guiding protrusions to enable the primary condensing lens 115 to move leftward/rightward horizontally; and a primary condensing lens liner 116 seating and fixing the primary condensing lens 115 therein, and being combined with the main clamp 111 and the clamp guide cover 117 so as to slide leftward/rightward between the main clamp 111 and the clamp guide cover 117.

In this case, anti-slip rubber pieces 118 may be further provided on each of inner surfaces of side walls of the main clamp 111 and each of inner surfaces of side walls of the movable clamp 112 so as to prevent the inner surfaces from slipping when the inner surfaces of the side walls of the main clamp 111 and the movable clamp 112 contact with the outer frame of the mobile phone 150. In addition, an aspheric lens may be used as the primary condensing lens 115. Here, the aspheric lens refers to a curved-surface lens having multiple radii, not one radius, so as to condense light passing through a lens for a specific purpose while a light source are spaced apart at a predetermined interval from the lens.

FIG. 3 shows assembled states of the base clamp module shown in FIG. 1 and FIG. 2 and a state of the base clamp module mounted to the mobile phone.

Referring to FIG. 3, the primary condensing lens liner 116 on which the primary condensing lens 115 sits is combined with the main clamp 111 and the clamp guide cover 117 so as to slide leftward/rightward therebetween, as shown in FIGS. 3(A) and 3(B). In addition, the base clamp module 110 on which the primary condensing lens 115 sits is mounted to the mobile phone 150 so as to slidably be attachable to/detachable from the mobile phone, as shown in FIG. 3(C). In this case, the base clamp module 110 may reciprocate slidably in a direction of a long side part of the mobile phone 150, and the main clamp 111 of the base clamp module 110 may reciprocate rectilinearly in a direction of a short side part of the mobile phone 150.

As shown in FIG. 4, the zoom condensing lens module 120 is provided on the base clamp module 110 to be attachable to/detachable from the base clamp module, the zoom condensing lens module having a secondary zoom condensing lens 125 focusing and refracting incident light from the lighting device of the mobile phone 150 so as to increase a projection distance and having a secondary zoom condensing lens fixing means supporting and fixing the secondary zoom condensing lens 125 so as to be capable of zooming in/out the secondary zoom condensing lens 125 to adjust the projection distance to a near or far distance.

Here, the secondary zoom condensing lens fixing means may include: a secondary zoom condensing lens main case 121 being combined with the clamp guide cover 117 provided on the main clamp 111 of the primary condensing lens fixing means so as to be slidably attachable to/detachable from the clamp guide cover, the secondary zoom condensing lens main case providing a moving space for zooming in/out of the secondary zoom condensing lens 125; a zoom liner small module 126 being combined with the secondary zoom condensing lens main case 121 so as to be inserted to and withdrawn from the secondary zoom condensing lens main case within a moving range set for the secondary zoom condensing lens main case 121; a secondary zoom condensing lens liner 124 fixing the secondary zoom condensing lens 125 to the zoom liner small module 126 and being combined with the secondary zoom condensing lens main case 121 so as to be slide therein; and a zoom limit liner 122 being combined with the secondary zoom condensing lens main case 121 therein, the zoom limit liner holding the secondary zoom condensing lens liner 124 such that the secondary zoom condensing lens liner 124 is not removed from the secondary zoom condensing lens main case 121.

In this case, the secondary zoom condensing lens liner 124 further includes a rubber ring 123 allowing the zoom liner small module 126 to slide efficiently without shaking in the secondary zoom condensing lens main case 121 when the zoom liner small module 126 is inserted into/withdrawn from the secondary zoom condensing lens main case 121 by zooming in/out of the zoom liner small module. In addition, as in the primary condensing lens 115, the aspheric lens may be used as the secondary zoom condensing lens 125.

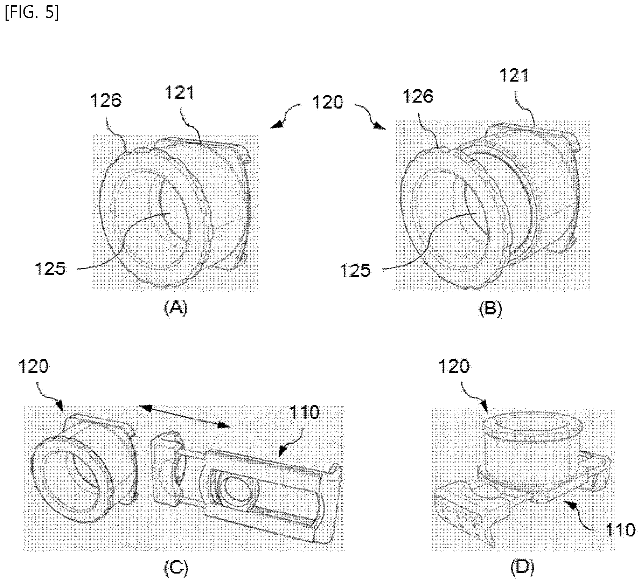

FIG. 5 shows assembled states of the zoom condensing lens module shown in FIG. 4, and mounting the assembled zoom condensing lens module to the base clamp module.

In FIG. 5, FIG. 5(A) shows a state of the zoom condensing lens module 120 zoomed in, and light is condensed at a relatively wide angle (for example, around 20∼30°). FIG. 5(B) shows a state of the zoom condensing lens module 120 zoomed out, and light is condensed at a relatively narrow angle (for example, around 2∼6°). As shown in FIGS. 5(C) and 5(D), the zoom condensing lens module 120 is combined with the main clamp 111 of the primary condensing lens fixing means of the base clamp module 110 so as to be slidably attachable to/detachable from the main clamp 111.

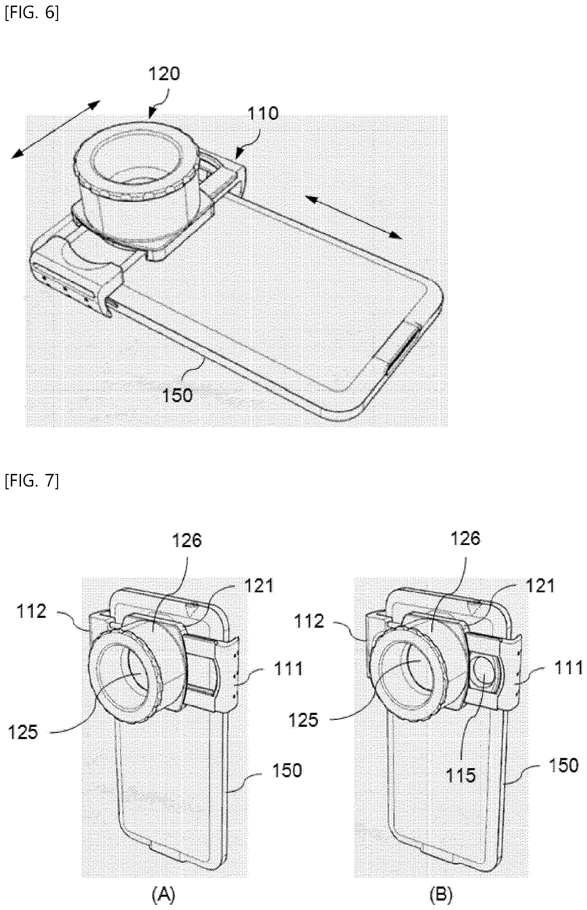

FIG. 6 is a view showing a state of the base clamp module mounted to the mobile phone, the base clamp module being combined with the zoom condensing lens module of the device for condensing and changing light of a mobile phone according to the first embodiment of the present invention.

As shown in FIG. 6, the zoom condensing lens module 120 is combined with the base clamp module 110, and the base clamp module 110 is mounted on the mobile phone 150 so as to perform zooming in/out and condensing light.

FIG. 7 shows showing a secondary condensing according to uses of a first lens and a second lens in the state of FIG. 6 and functions of zooming in/out and of condensing light according to the use of a second lens alone.

Referring to FIG. 7, a secondary light-condensing function may be performed according to the primary condensing lens 115 and the secondary zoom condensing lens 125, as shown in FIG. 7(A). Further, functions of zooming in/out and of condensing light may be performed according to the secondary zoom condensing lens 125, as shown in FIG. 7(B).

FIG. 8 shows an exploded perspective view and assembled perspective views of a configuration of a color filter module of the device for condensing and changing light of a mobile phone according to the first embodiment of the present invention.

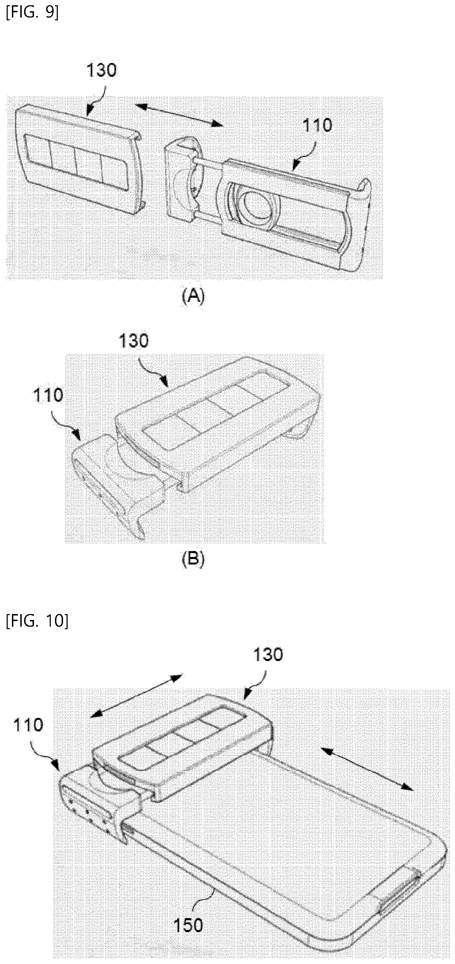

In FIG. 8, FIG. 8(A) shows a disassembled state of the color filter module 130, and FIGS. 8(B) and 8(C) show assembled states thereof. The color filter module 130 is provided on the base clamp module 110 to be attachable to/detachable from the base clamp module (See FIG. 9), the filter module having a plurality of color filters 131 passing only wavelengths of a specific color with respect to light emitted from the lighting device of the mobile phone 150 so as to emit light of the specific color and having a color filter fixing means fixing the color filters 131.

The color filter fixing means is a rectangular-shaped plate member and includes: a color filter seating hole 132h provided in a middle part of a body thereof, the color filter seating hole seating and fixing the plurality of color filters of different colors therein in series and side by side; and a color filter liner 132 having holding jaws 132c on ends of opposite longitudinal side parts thereof, the holding jaws allowing the color filter fixing means to be mounted to the base clamp module 110 so as to be attachable to/detachable from the base clamp module 110.

As shown in FIG. 9, the color filter module 130 is slidably provided on the base clamp module 110. FIG. 9(A) shows a state of the color filter module 130 prior to being mounted to the base clamp module 110, and FIG. 9(B) shows a state of the color filter module 130 posterior to being mounted to the base clamp module 110.

FIG. 10 is a view showing a state in which the base clamp module of FIG. 9 with which the color filter module is combined is mounted to the mobile phone.

As shown in FIG. 10, the base clamp module 110 with which the color filter module 130 is combined is slidably mounted to the mobile phone 150. In this situation, when a user matches a position of a filter of a desired color (for example, a blue filter) with a position of the primary condensing lens 115 of the base clamp module 110 by sliding the color filter module 130, a light emitted through the primary condensing lens 115 is a blue light due to filtering by the blue filter (passing only wavelengths corresponding to blue and blocking wavelengths of the remaining colors). Accordingly, a user may use the blue light for a specific use. For example, the blue light may be used as a fishing light since the blue light cannot be recognized by fish.

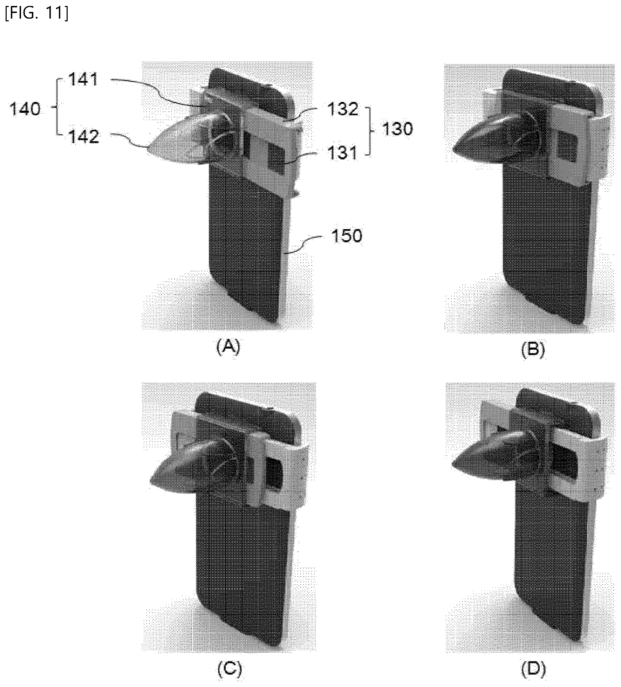

FIG. 11 shows color lighting embodied by a primary condensing lens, the color filter module, and a mood lighting cap of the device for condensing and changing light of a mobile phone according to the first embodiment of the present invention.

Referring to FIG. 11, the device for condensing and changing light of a mobile phone according to the first embodiment of the present invention may further include the mood lighting cap 140 provided on a front surface of the color filter liner 132 of the color filter module 130, the mood lighting cap receiving light of color changed by the color filter 131 and emitting lighting light of the light.

In this case, the mood lighting cap 140 includes a base part 141 provided on the front surface of the color filter liner 132 of the color filter module 130 so as to be slidably attachable to/detachable from the front surface, and a cone-shaped lamp part 142 provided integrally with the base part 141. Here, the lamp part 142 may be a transparent or translucent lamp.

Accordingly, as shown in FIGS. 11(A) to 11(D), the mood lighting cap 140 may be manufactured in one of various colors such as yellow, blue, green, or red corresponding to color of the color filter 131, and may embody color lights of various moods according to selection of a user.

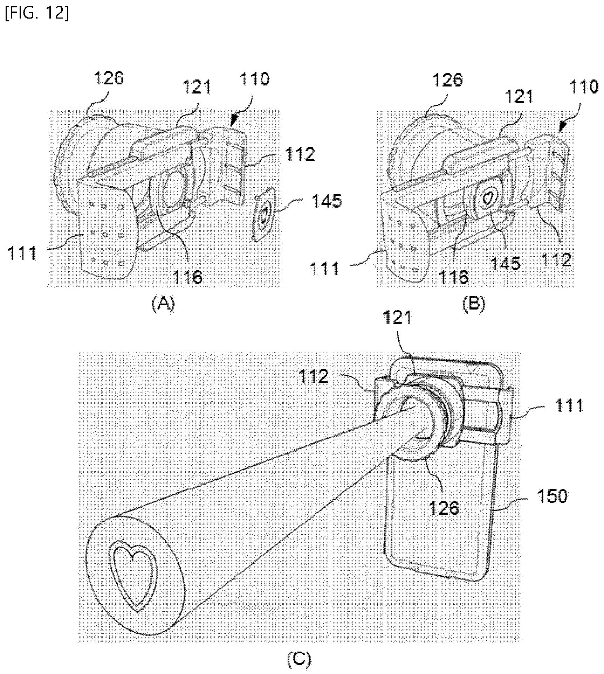

FIG. 12 shows an image projection function according to an application of an image film member to the primary condensing lens of the device for condensing and changing light of a mobile phone according to the first embodiment of the present invention.

Referring to FIG. 12, the device for condensing and changing light of a mobile phone according to the first embodiment of the present invention may further include the image film member 145 provided on a rear surface of the primary condensing lens liner 116 of the base clamp module 110 so as to be attachable to/detachable from the rear surface, the image film member projecting a specific image on a radiating surface of light by receiving light from the lighting device of the mobile phone 150. An image projection by the image film member 145 may be used to promote and to deliver messages of kinds of events. FIG. 12(A) shows a state before the image film member 145 is provided on the primary condensing lens liner 116, FIG. 12(B) shows a state after the image film member 145 is provided on the primary condensing lens liner 116, and FIG. 12(C) shows a state of a specific image (a heart image in the present invention) projected on the radiating surface of light by the image film member 145.

Up to now, the device for condensing and changing light of a mobile phone according to the first embodiment of the present invention are described, and hereinbelow, a device for condensing and changing light of a mobile phone according to a second embodiment of the present invention will be described.

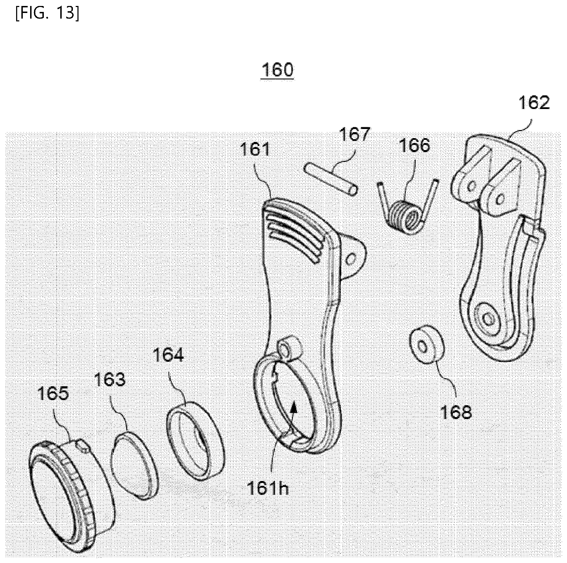

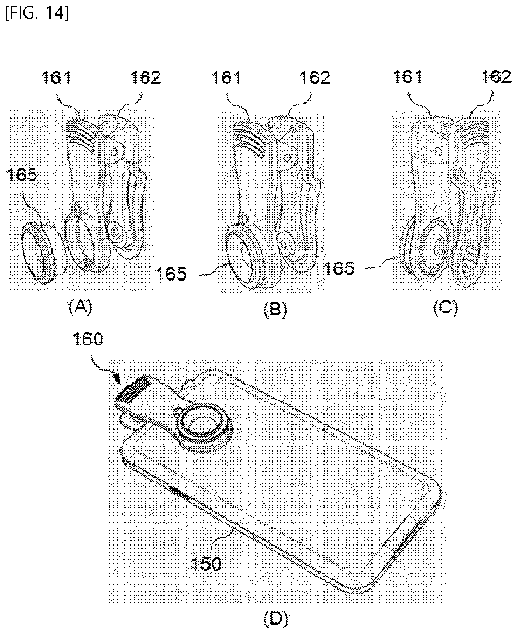

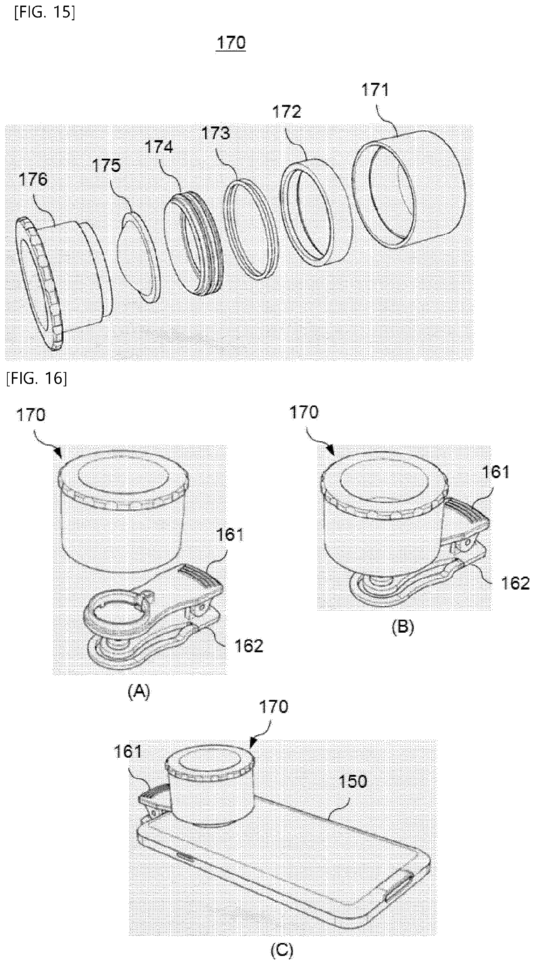

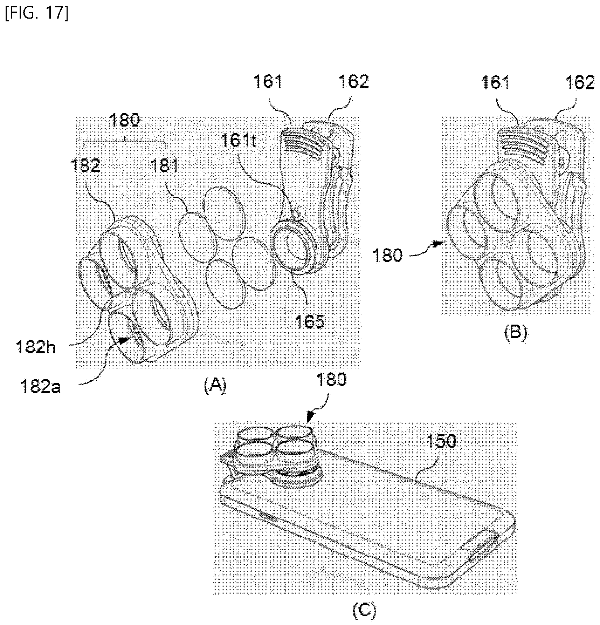

The device for condensing and changing light of a mobile phone according to the second embodiment of the present invention includes a primary condensing lens module 160 (See FIG. 13 and FIG. 14), a zoom condensing lens module 170 (See FIG. 15), and a color filter module 180 (See FIG. 17).

FIG. 13 is an exploded perspective view showing a configuration of the primary condensing lens module of the device for condensing and changing light of a mobile phone according to the second embodiment of the present invention, and FIG. 14 shows a process of assembling the primary condensing lens module shown in FIG. 13 and a state of the primary condensing lens module mounted to the mobile phone.

Referring to FIG. 13 and FIG. 14, the primary condensing lens module 160 is provided on the mobile phone 150 to clampingly be attachable to/detachable from the mobile phone, and the primary condensing lens module includes: a primary condensing lens 163 focusing and refracting incident light from a lighting device of the mobile phone 150 so as to increase a projection distance; and a primary condensing lens fixing means supporting and fixing the primary condensing lens 163.

Here, the primary condensing lens fixing means of the primary condensing lens module 160 includes: a clip base 161 constituting a first side of a clip and having a through hole 161h provided on a body thereof so as to fix the primary condensing lens 163 in the through hole; a clip server 162 constituting a second side of the clip and being combined with the clip base 161 so as to enable a hinge movement by an elastic force of a spring 166; a lens fixing liner 164 seating and fixing the primary condensing lens 163 therein; and a lens liner 165 being combined with and fixed to the clip base 161 after receiving the lens fixing liner 164 in which the primary condensing lens 163 is seated. In this case, an anti-slip rubber piece 168 may further be provided on a predetermined portion of a body of the clip server 162 so as to prevent the primary condensing lens module 160 from slipping on the mobile phone 150 when the primary condensing lens module 160 is mounted to the mobile phone 150. In FIG. 13, a reference numeral 167 refers to a spring shaft fixing the sprig 166 to the clip base 161 and the clip server 162 therebetween after the spring 166 is provided between the clip base 161 and the clip server 162. In addition, FIG. 14(A) shows a state before the lens liner 165 having the primary condensing lens 163 and the lens fixing liner 164 combined with each other is combined with the clip base 161, FIG. 14(B) and FIG. 14(C) show a state after the lens liner 165 is combined with the clip base 161, and FIG. 14(D) shows a state of the primary condensing lens module 160 mounted to the mobile phone 150.

FIG. 15 is an exploded perspective view showing a configuration of a secondary zoom condensing lens module of the device for condensing and changing light of a mobile phone according to the second embodiment of the present invention, and FIG. 16 shows a process of assembling the secondary zoom condensing lens module shown in FIG. 15, a state of the secondary zoom condensing lens module combined with a clip base, and a state of the secondary zoom condensing lens module mounted to the mobile phone.

Referring to FIG. 15 and FIG. 16, the zoom condensing lens module 170 is provided on the primary condensing lens module 160 (more specifically, the clip base 161 of the primary condensing lens module 160) to be attachable to/detachable from the primary condensing lens module, the zoom condensing lens module having a secondary zoom condensing lens 175 focusing and refracting incident light from the lighting device of the mobile phone 150 so as to increase the projection distance and having a secondary zoom condensing lens fixing means supporting and fixing the secondary zoom condensing lens 175 so as to be capable of zooming in/out the secondary zoom condensing lens 175 to adjust the projection distance to a near or far distance.

The secondary zoom condensing lens fixing means includes: a secondary zoom condensing lens main case 171 combined with the clip base 161 of the primary condensing lens fixing means so as to fittingly be attachable to/detachable from the clip base, the secondary zoom condensing lens main case providing a moving space for zooming in/out the secondary zoom condensing lens 175; a zoom liner small module 176 combined with the secondary zoom condensing lens main case so as to be inserted to and withdrawn from the secondary zoom condensing lens main case within a moving range set for the secondary zoom condensing lens main case 171; a secondary zoom condensing lens liner 174 fixing the secondary zoom condensing lens 175 to the zoom liner small module 176 and combined with the secondary zoom condensing lens main case 171 so as to be slide therein; and a zoom limit liner 172 combined with the secondary zoom condensing lens main case 171 therein, the zoom limit liner holding the secondary zoom condensing lens liner 174 such that the secondary zoom condensing lens liner 174 is not removed from the secondary zoom condensing lens main case 171.

In this case, the secondary zoom condensing lens liner 174 may further include a rubber ring 173 allowing the zoom liner small module 176 to slide efficiently without shaking in the secondary zoom condensing lens main case 171 when the zoom liner small module 176 is inserted into/withdrawn from the secondary zoom condensing lens main case 171 by zooming in/out of the zoom liner small module. FIG. 16(A) shows a state before the zoom condensing lens module 170 is combined with the clip base 161 of the primary condensing lens module 160, FIG. 16(B) shows a state after the zoom condensing lens module is combined with the clip base, and FIG. 16(C) shows a state of the zoom condensing lens module 170 mounted to the mobile phone 150 by clipping performed by the clip base 161 and the clip server 162 while the zoom condensing lens module 170 is combined with the clip base 161 of the primary condensing lens module 160.

FIG. 17 shows a process of combining a color filter module of the device for condensing and changing light of a mobile phone with the primary condensing lens module and a state of the color filter module, which is combined with the primary condensing lens module, mounted to the mobile phone according to the second embodiment of the present invention.

Referring to FIG. 17, the color filter module 180 is provided on the primary condensing lens module 160 (specifically, the clip base 161 of the primary condensing lens module 160) to be attachable to/detachable from the primary condensing lens module, the color filter module having a color filter 181 passing only wavelengths of a specific color with respect to emitted light from the lighting device of the mobile phone 150 so as to emit light of the specific color and having a color filter fixing means fixing the color filter 181.

Here, the color filter fixing means is a diamond-shaped plate member and includes: a plurality of color filter seating holes 182a provided on a body thereof, each of the plurality of color filter seating holes seating and fixing each of a plurality of color filters 181 of different colors therein and being fitted over the lens liner 165 of the primary condensing lens module 160; and a color filter liner 182 having a through hole 182h provided on a middle part of a body thereof so as to be fitted over a combining protrusion 161t provided on the clip base 161. When a user changes a color in using the color filter module 180, the color filter liner 182 is separated from the clip base 161, and then the color filter liner is rotated such that a desired color is selected, and the color filter liner of the desired color is fitted to the clip base, so that color changing is simply performed. FIG. 17(A) shows a state before the color filter module 180 is assembled, FIG. 17(B) shows a state of the assembled color filter module 180 combined with the clip base 161 of the primary condensing lens module 160, and FIG. 17(C) shows a state of the color filter module 180 mounted to the mobile phone 150 while the color filter module is combined with the clip base 161.

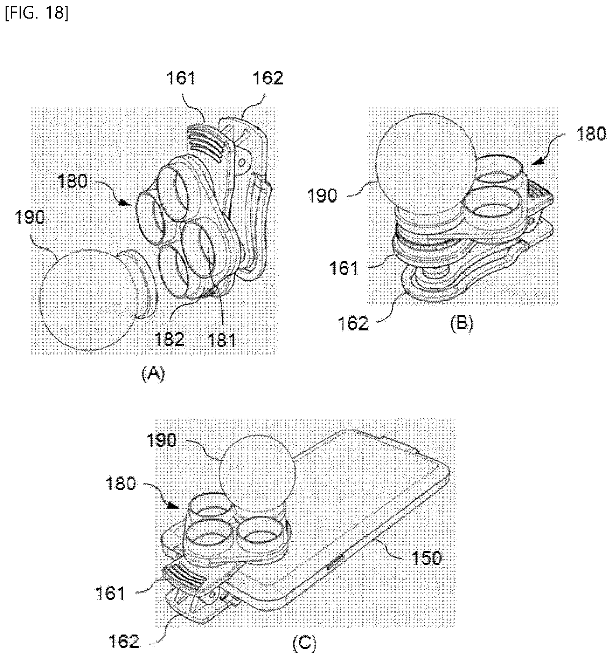

FIG. 18 shows a mood lighting function performed by the primary condensing lens module, the color filter module, and a mood lamp cap of the device for condensing and changing light of a mobile phone according to the second embodiment of the present invention.

Referring to FIG. 18, preferably, the device for condensing and changing light of a mobile phone according to the second embodiment of the present invention may further include the mood lamp cap 190 provided on a front surface of the color filter liner 182 of the color filter module 180, the mood lamp cap receiving light of color changed by the color filter 181 and emitting lighting light of the changed light. In this case, the mood lamp cap 190 may be manufactured of a silicone so as to have an empty space therein.

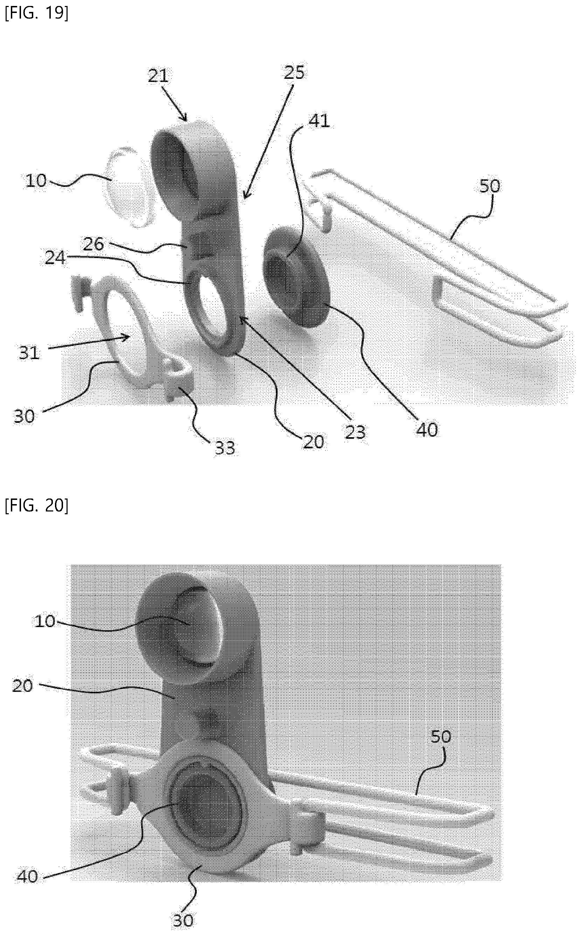

Meanwhile, FIG. 19 and FIG. 20 show a device for condensing and changing light of a mobile phone according to a third embodiment of the present invention, and FIG. 19 is an exploded perspective view showing a configuration of the device for condensing and changing light of a mobile phone, with a color filter member being omitted, and FIG. 20 is a perspective view showing a combined state of the device for condensing and changing light of a mobile phone shown in FIG. 19.

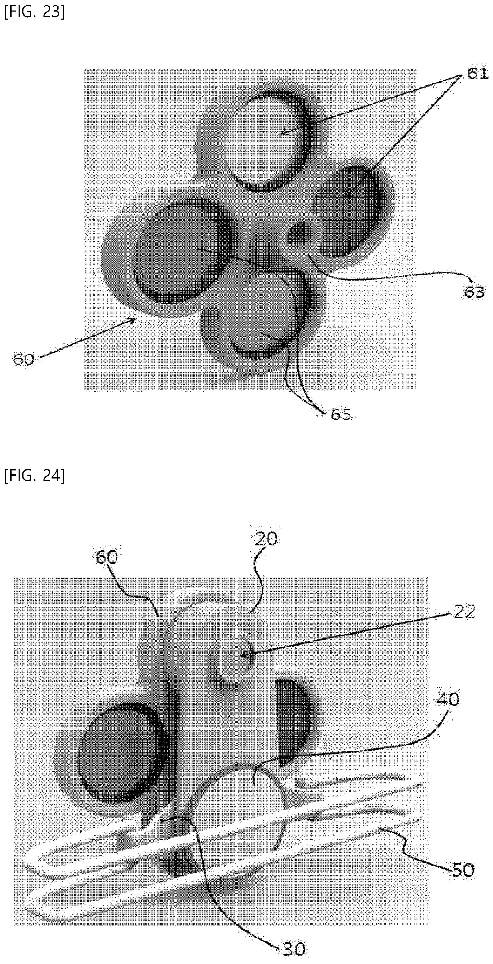

Referring to FIG. 19 and FIG. 20, the device for condensing and changing light of a mobile phone according to the third embodiment of the present invention includes a condensing optical lens 10 (including an optical lens set in which at least two optical lenses are serially arranged); a combining means for providing the optical lens 10 on a front part (an outer side) of a lighting light source of the mobile phone so as to be attachable to/detachable from the front part of the lighting light source; and a color filter member 60 (See FIG. 23) provided attachably/detachably on the combining means so as to be positioned at a front part of the optical lens 10.

Here, the optical lens 10 is configured to be one convex lens, and the combining means includes a combining main body 20, a hanging part 30, a medium part 40, and an elastic engaging part 50.

Although the combining main body 20 is entirely plate-shaped, the combining main body includes: a lighting hole 22 (See FIG. 24) provided on an upper part thereof; and a cylindrical lens combining part 21, with which the convex lens is combined, provided to protrude outward so as to communicate with the lighting hole 22 on the plate-shaped body.

A circular combining hole is provided on a mobile phone combining part 23, which is located on a lower part of the combining main body 20, and a connecting part 25 is provided between the mobile phone combining part and the cylindrical lens combining part so as to be integral to one another. A cylinder constituting the lens combining part 21 is configured to be small in height (thickness) compared to a diameter of a circle of the cylinder, and the mobile phone combining part 23 includes a rib 24 provided on a surrounding part thereof, which constitutes the circular combining hole, by protruding from the surrounding part, wherein the rib is perpendicular to the plate-shaped combining main body

The hanging part 30 may be made of a rubber or soft synthetic resins, which are flexible, compared to the combining main body, and is bilaterally symmetric, the hanging part including: a center hole 31 provided on a center thereof and a hanger 33 provided on each of opposite sides of the hanging part. The hanging part 30 is provided on an outside of the combining main body, which is a side opposite to a side at which the mobile phone is positioned, relative to the combining main body 20, and in this case, the circular rib 24, provided by protruding toward outside while constituting the vicinity of the combining hole of the mobile phone combining part 23, is press-fitted into the center hole 31.

The medium part 40 may also be made of a flexible material such as a material of the hanging part 30, and includes: a rib 41 being combined with the rib 24 by being press-fitted to an inner side of the circular rib 24 protruding from the vicinity of the combining hole; and a circular plate provided between the mobile phone combining part and the mobile phone so as to be integral to the rib 41.

The elastic engaging part 50 is configured to have a band shape (a ring shape), and while each of opposite sides of the elastic engaging part is held by the hanger 33 of the hanging part 30, a middle part of the opposite sides surrounds a body of the mobile phone with which the device of condensing and changing light of the present invention is combined so as to engage the mobile phone with the hanging part 30.

A small cylindrical protrusion 26 is provided on an outer surface of the connecting part 25 connecting the lens combining part 21 with the mobile phone combining part 23.

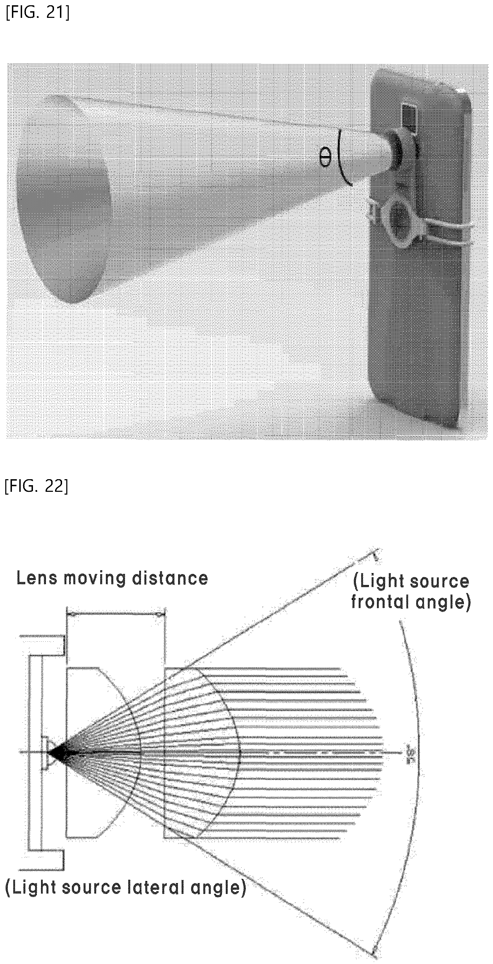

FIG. 21 is a perspective view showing a state of the device for condensing and changing light of a mobile phone of FIG. 20 mounted to the mobile phone.

Referring to FIG. 21, a truncated cone shape spreading from the optical lens 10 of the device for condensing and changing light of a mobile phone embodies light spreading out at a predetermined radiation angle θ or to a predetermined light-condensing degree through the optical lens 10 after being emitted from the lighting light source. The radiation angle θ is significantly different from an angle at which the lighting light of a normal mobile phone spreads out, thereby having a substantial light-condensing degree.

The elastic engaging part 50 has elasticity, and accordingly, an external force is applied to the entirety of the device of condensing and changing light while the elastic engaging part is engaged with the mobile phone such that the device easily moves in parallel while sliding upward/downward or leftward/rightward on a surface of the mobile phone. Accordingly, wherever the lighting light source of the mobile phone is, the lens combining part 21 of the device for condensing and changing light of a mobile phone may be arranged exactly on the lighting light source.

However, in this case, when the device for condensing and changing light of a mobile phone is easily moved by an external force, a position of the device of condensing and changing light is changed during the use of the device, which blocks the lighting light, or deviates from a lighting position, which may prevent condensing the light, whereby inconvenience in use may occur. Accordingly, the medium part 40 is configured to have a frictional force not to easily slip on a surface of the mobile phone, and the elastic engaging part 50 also has a predetermined elastic coefficient not to be easily elongated.

Of course, when the device for condensing and changing light of a mobile phone is not required, in an order contrary to the order of engagement, elasticity of the elastic engaging part 50 is used so as to increase a length of the elastic engaging part such that the elastic engaging part is removed from the hanger of the hanging part 30, whereby the mobile phone is removed from the device of condensing and changing light. Accordingly, the device of condensing and changing light may be kept independently.

In the above embodiment, although the optical lens 10 is assumed to be fixed to the cylindrical lens combining part 21, threads (female threads) are provided on an inner surface of the cylindrical lens combining part 21 according to the embodiment, and threads (male threads), which match the female threads, are provided on an edge surrounding the optical lens 10, whereby the optical lens 10 is rotated in the cylindrical lens combining part such that the optical lens withdraws from or approaches the lighting light of the mobile phone so as to change the light-condensing degree. Instead of adjustment of the threads, in the cylindrical lens combining part, a distance of the optical lens from the mobile phone may be changed by the optical lens sliding so as to change the light-condensing degree. As described above, FIG. 22 is a concept-describing view showing that the light-condensing degree may be changed according to a distance between a lighting light source and the optical lens of the mobile phone.

FIG. 23 is a rear side perspective view of the color filter member applied to the device for condensing and changing light of a mobile phone according to the third embodiment of the present invention, and FIG. 24 is a rear side perspective view of the device for condensing and changing light of a mobile phone in a state of the color filter member of FIG. 23 combined with the combining main body.

Referring to FIG. 23 and FIG. 24, the color filter member 60 includes: filter holes 61 provided on an upper side, a lower side, a left side, and a right side of a middle part of the color filter member; and a combining hole 63 provided on the middle part thereof, the combining hole being fitted to the cylindrical protrusion 26 provided on an outer surface of the connecting part 25 (See FIG. 19), wherein a color filter 65 of a desired color is fitted into each of the filter holes 61. In this case, the color filter 65 is positioned outside of the cylinder constituting the lens combining part 21, and the color filter member 60 is provided in such a manner that a distance spaced apart from each other between a center of the cylindrical protrusion 26 and a center of the lens combining part 21 in the combining main body 20 corresponds to a distance spaced apart from each other between a center of the combining hole 63 and a center of the filter hole 61 so as to change color of condensed light emitted from the optical lens 10.

Accordingly, when the color filter member 60 having the color filter 65 of a desired color is combined with the device for condensing and changing light of a mobile phone spreading the lighting light of the mobile phone at a predetermined angle, a condensed light of the desired color is focused on an object at a predetermined distance in front of the device so as to have a desired effect, and when required, the color filter member 60 is rotated so as to simply change color of the condensed light spreading from the lighting light source through the device for condensing and changing light of a mobile phone to an outside.

For example, when the mobile phone is used as the flashlight or a lantern in the open air, green-colored light may be used not to surprise animals around, blue-colored or purple-colored light may be used not to surprise fish for fishing, amber-colored light may be used to function as a fog light when it's foggy, and red-colored light is suitable to be used for a warning or for a signal of danger.

Meanwhile, according to an embodiment, the optical lens may not be provided in the lens combining part of the device for condensing and changing light of a mobile phone, and the color filter may include the condensing optical lens provided thereon so as to have a changed light of a specific color and a condensed lighting light.

In addition, when a plurality of optical lenses having different refractive indices is used as a substitute for the color filter although the color filter is used as an element of the color filter member here, the plurality of optical lenses may replace the optical lens of the previous embodiment of FIG. 19 or be used as a lens selecting member having the effect of changing the light-condensing degree by operating in cooperation with the optical lens.

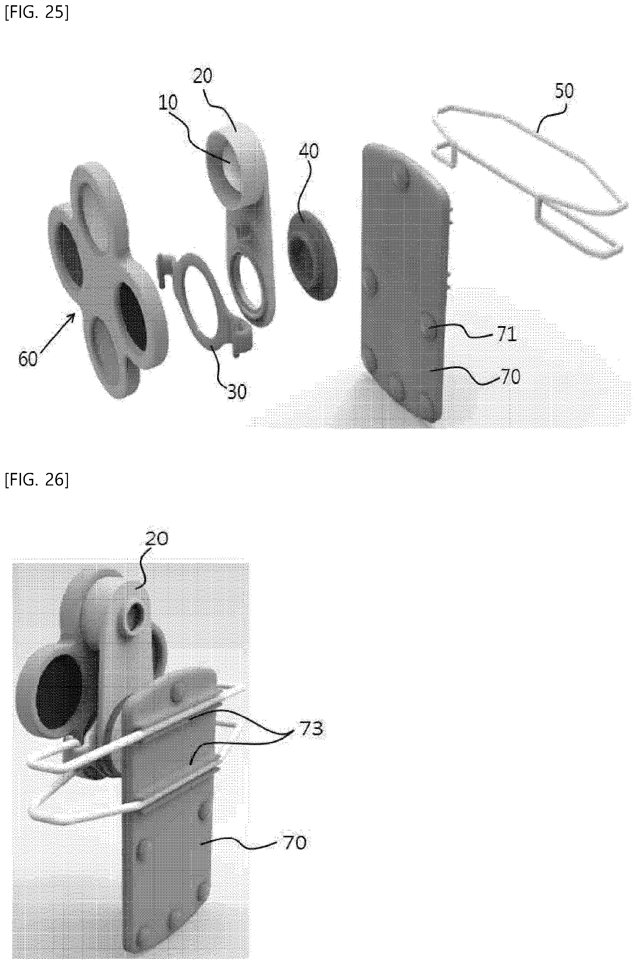

FIG. 25 is an exploded perspective view showing the embodiment of the device for condensing and changing light of a mobile phone, which is further provided with a clip-functioning plate to be mounted to the mobile phone; and FIG. 26 is a rear side perspective view showing a combined state of the device for condensing and changing light of a mobile phone of FIG. 25. Here is not shown the mobile phone to be combined with the plate during use of the plate.

Referring to FIG. 25 and FIG. 26, in the embodiment, the plate 70 of a clip function may be further provided between a rear contact surface of the mobile phone and the elastic engaging part 50. That is, the plate 70 of the clip function is further provided at a side opposite to a side of the device of condensing and changing light of the previous embodiment relative to the mobile phone, whereby the plate 70 is used as a fitting clip such that a gap between the mobile phone and the plate 70 is fitted into and held by a collar or an edge of a pocket while the elastic engaging part 50 (for example, a rubber band) is combined with the mobile phone.

In this case, a pad part 71 may be further provided on a surface of the plate 70 such that the plate does not slip on and fall out from a collar or a pocket edge, and band combining grooves 73 may be further provided on the surface of the plate 70 such that the plate 70 and the elastic engaging part 50 of the rubber band do not slip on and deviate from a collar or a pocket edge.

As described above, the device for condensing and changing light of a mobile phone according to the present invention condenses light emitted from a lighting device of a smart phone by the primary condensing lens and the secondary zoom condensing lens and changes light by the color filter, thereby increasing the projection distance by providing high illuminance to be used as a flash or a lighting device of a specific use and being used in a specific situation or for specific use by providing light of a specific color.

## Claims

1. A device for condensing and changing light of a mobile phone, the device comprising:
a base clamp module being slidably provided on the mobile phone to be attachable to/detachable from the mobile phone, the base clamp module having a primary condensing lens focusing and refracting incident light from a lighting device of the mobile phone so as to increase a projection distance and having a primary condensing lens fixing means supporting and fixing the primary condensing lens;
a zoom condensing lens module being provided on the base clamp module to be attachable to/detachable from the base clamp module, the zoom condensing lens module having a secondary zoom condensing lens focusing and refracting incident light from the lighting device of the mobile phone so as to increase the projection distance and having a secondary zoom condensing lens fixing means supporting and fixing the secondary zoom condensing lens so as to be capable of zooming in/out the secondary zoom condensing lens to adjust the projection distance to a near or far distance; and
a color filter module being provided on the base clamp module to be attachable to/detachable from the base clamp module, the color filter module having a color filter passing only wavelengths of a specific color with respect to emitted light from the lighting device of the mobile phone so as to emit light of the specific color and having a color filter fixing means fixing the color filter.

2. The device of claim 1, wherein the primary condensing lens fixing means of the base clamp module includes:
a main clamp provided on an outer frame of the mobile phone to be slidably attachable to/detachable from the outer frame;
a movable clamp having a clamp shaft provided in a body thereof by passing through the body and being combined with opposite sides of the main clamp so as to reciprocate rectilinearly by using the clamp shaft;
a pair of clamp springs fitting over each of two shafts of the clamp shaft so as to be provided in the main clamp, the clamp springs providing an elastic restoring force to enable the movable clamp to reciprocate rectilinearly;
a clamp guide cover being combined with a front surface of the main clamp, the clamp guide cover providing guiding protrusions to enable the primary condensing lens to move leftward/rightward horizontally; and
a primary condensing lens liner seating and fixing the primary condensing lens therein and being combined with the main clamp and the clamp guide cover so as to slide leftward/rightward between the main clamp and the clamp guide cover.

3. The device of claim 2, wherein anti-slip rubber pieces are further provided on each of inner surfaces of side walls of the main clamp and each of inner surfaces of side walls of the movable clamp so as to prevent the inner surfaces from slipping when the inner surfaces of the side walls of the main clamp and the movable clamp contact with the outer frame of the mobile phone.

4. The device of claim 2, wherein the secondary zoom condensing lens fixing means of the zoom condensing lens module includes:
a secondary zoom condensing lens main case being combined with the clamp guide cover provided on the main clamp of the primary condensing lens fixing means so as to be slidably attachable to/detachable from the clamp guide cover, the secondary zoom condensing lens main case providing a moving space for zooming in/out of the secondary zoom condensing lens;
a zoom liner small module being combined with the secondary zoom condensing lens main case so as to be inserted to and withdrawn from the secondary zoom condensing lens main case within a moving range set for the secondary zoom condensing lens main case;
a secondary zoom condensing lens liner fixing the secondary zoom condensing lens to the zoom liner small module and being combined with the secondary zoom condensing lens main case so as to be slide therein; and
a zoom limit liner being combined with the secondary zoom condensing lens main case therein, the zoom limit liner holding the secondary zoom condensing lens liner such that the secondary zoom condensing lens liner is not removed from the secondary zoom condensing lens main case.

5. The device of claim 4, wherein the secondary zoom condensing lens liner further includes a rubber ring allowing the zoom liner small module to slide efficiently without shaking in the secondary zoom condensing lens main case when the zoom liner small module is inserted into/withdrawn from the secondary zoom condensing lens main case by zooming in/out of the zoom liner small module.

6. The device of claim 1, wherein the color filter fixing means of the color filter module is a rectangular-shaped plate member and includes:
a color filter seating hole provided in a middle part of a body thereof, the color filter seating hole seating and fixing a plurality of color filters of different colors therein in series and side by side; and a color filter liner having holding jaws on ends of opposite longitudinal side parts thereof, the holding jaws allowing the color filter fixing means to be mounted to the base clamp module so as to be attachable to/detachable from the base clamp module.

7. The device of claim 6, further including:
a mood lighting cap provided on a front surface of the color filter liner, the mood lighting cap receiving light of color changed by the color filter and emitting lighting light of the light.

8. The device of claim 7, wherein the mood lighting cap includes a base part provided on the front surface of the color filter liner so as to be slidably attachable to/detachable from the front surface, and a cone-shaped lamp part provided integrally with the base part.

9. The device of claim 2, further comprising:
an image film member provided on a rear surface of the primary condensing lens liner of the base clamp module so as to be attachable to/detachable from the rear surface, the image film member projecting a specific image on a radiating surface of light by receiving light from the lighting device of the mobile phone.

10. A device for condensing and changing light of a mobile phone, the device comprising:
a primary condensing lens module being provided on the mobile phone to clampingly be attachable to/detachable from the mobile phone, the primary condensing lens module having a primary condensing lens focusing and refracting incident light from a lighting device of the mobile phone so as to increase a projection distance and having a primary condensing lens fixing means supporting and fixing the primary condensing lens;
a zoom condensing lens module being provided on the primary condensing lens module to be attachable to/detachable from the primary condensing lens module, the zoom condensing lens module having a secondary zoom condensing lens focusing and refracting incident light from the lighting device of the mobile phone so as to increase the projection distance and having a secondary zoom condensing lens fixing means supporting and fixing the secondary zoom condensing lens so as to be capable of zooming in/out the secondary zoom condensing lens to adjust the projection distance to a near or far distance; and
a color filter module being provided on the primary condensing lens module to be attachable to/detachable from the primary condensing lens module, the color filter module having a color filter passing only wavelengths of a specific color with respect to emitted light from the lighting device of the mobile phone so as to emit light of the specific color and having a color filter fixing means fixing the color filter.

11. The device of claim 10, wherein the primary condensing lens fixing means of the primary condensing lens module includes:
a clip base constituting a first side of a clip and having a through hole provided on a body thereof so as to fix the primary condensing lens;
a clip server constituting a second side of the clip and being combined with the clip base so as to enable a hinge movement by an elastic force of a spring;
a lens fixing liner seating and fixing the primary condensing lens therein; and
a lens liner being combined with and fixed to the clip base after receiving the lens fixing liner in which the primary condensing lens is seated.

12. The device of claim 11, wherein an anti-slip rubber piece is further provided on a predetermined portion of a body of the clip server so as to prevent the primary condensing lens module from slipping on the mobile phone when the primary condensing lens module is mounted to the mobile phone.

13. The device of claim 10, wherein the secondary zoom condensing lens fixing means of the zoom condensing lens module includes:
a secondary zoom condensing lens main case being combined with a clip base of the primary condensing lens fixing means so as to fittingly be attachable to/detachable from the clip base, the secondary zoom condensing lens main case providing a moving space for zooming in/out the secondary zoom condensing lens;
a zoom liner small module being combined with the secondary zoom condensing lens main case so as to be inserted to and withdrawn from the secondary zoom condensing lens main case within a moving range set for the secondary zoom condensing lens main case;
a secondary zoom condensing lens liner fixing the secondary zoom condensing lens to the zoom liner small module and being combined with the secondary zoom condensing lens main case so as to be slide therein; and
a zoom limit liner being combined with the secondary zoom condensing lens main case therein, the zoom limit liner holding the secondary zoom condensing lens liner such that the secondary zoom condensing lens liner is not removed from the secondary zoom condensing lens main case.

14. The device of claim 13, wherein the secondary zoom condensing lens liner further includes a rubber ring allowing the zoom liner small module to slide efficiently without shaking in the secondary zoom condensing lens main case when the zoom liner small module is inserted into/withdrawn from the secondary zoom condensing lens main case by zooming in/out of the zoom liner small module.

15. The device of claim 11, wherein the color filter fixing means of the color filter module is a diamond-shaped plate member and includes: a plurality of color filter seating holes provided on a body thereof, each of the plurality of color filter seating holes seating and fixing each of a plurality of color filters of different colors therein and being fitted over the lens liner of the primary condensing lens module; and a color filter liner having a through hole provided on a middle part of a body thereof so as to be fitted over a combining protrusion provided on the clip base.

16. The device of claim 11, further comprising:
a mood lamp cap being provided on a front surface of a color filter liner, the mood lamp cap receiving light of color changed by the color filter and emitting lighting light of the changed light.

17. A device for condensing and changing light of a mobile phone, the device comprising:
a condensing optical lens (including an optical lens set in which at least two optical lenses are serially arranged);
a combining means for providing the optical lens on a front part (an outer side) of a lighting light source of the mobile phone so as to be attachable to/detachable from the front part of a lighting light source; and
a color filter member provided attachably/detachably on the combining means so as to be positioned at a front part of the optical lens.

18. The device of claim 17, wherein an aspheric convex lens is used as the condensing optical lens, and
the combining means includes a combining main body, a hanging part, a medium part, and an elastic engaging part, wherein
the combining main body is entirely plate-shaped and includes: a lighting hole provided on an upper part thereof; a cylindrical lens combining part, with which the optical lens is combined, provided to protrude outward so as to communicate with the lighting hole on the plate-shaped combining main body; and a mobile phone combining part provided on a lower part of the combining main body, wherein the mobile phone combining part includes: a circular combining hole; and a rib provided on a surrounding part constituting the combining hole by protruding from the surrounding part so as to be perpendicular to the plate-shaped combining main body,
the hanging part is made of a rubber or soft synthetic resins, which is flexible, compared to the combining main body, and is bilaterally symmetric, the hanging part being provided on an outside of the combining main body, which is a side opposite to a side at which the mobile phone is positioned, relative to the combining main body and including: a center hole provided on a center thereof; and a hanger provided on each of opposite sides of the hanging part, wherein the rib is press-fitted into the center hole,
the medium part includes: a medium part rib being combined with the rib by being press-fitted to an inner side of the rib protruding from the surrounding part of the combining hole; and a circular plate provided between the mobile phone combining part and the mobile phone so as to be integral to the medium part rib, and
the elastic engaging part is configured to have a band shape (a ring shape), and while each of opposite sides of the elastic engaging part is held by the hanger of the hanging part, a middle part of the opposite sides surrounds a body of the mobile phone so as to engage the mobile phone with the hanging part.

19. The device of claim 17, wherein the color filter member includes a plurality of color filters, wherein a mounting angle of the color filter member in the combining means is changed so as to change color of lighting light.

20. The device of claim 18, further comprising:
a plate of a clip function provided between a rear contact surface of the mobile phone and the elastic engaging part.

21. The device of claim 20, wherein an anti-slip pad part is further provided on a surface of the plate, and band combining grooves are further provided on the surface of the plate such that the elastic engaging part does not deviate from the surface of the plate by slipping thereon.

22. The device of claim 17 or claim 18, wherein the optical lens moves forward/backward in the combining means so as to control a light-condensing degree of the lighting light source.

23. The device of claim 17, wherein the optical lens includes a plurality of lenses having different light-condensing degrees or refractive indices, and a lens selecting member is further provided on the combining means, the lens selecting member selecting one of the plurality of optical lens and placing the selected optical lens in front of the lighting light source of the mobile phone, wherein the lens selecting member changes a mounting (combining) angle thereof in the combining means so as to change the light-condensing degree of lighting light.
